**Europäisches Patentamt**

**European Patent Office**

**Office européen des brevets**

(19)

(11) Veröffentlichungsnummer : **0 372 340 B1**

(12) # EUROPÄISCHE PATENTSCHRIFT

(45) Veröffentlichungstag der Patentschrift :
**22.04.92 Patentblatt 92/17**

(51) Int. Cl.$^5$ : **A47C 31/02**

(21) Anmeldenummer : **89121826.5**

(22) Anmeldetag : **25.11.89**

(54) **Befestigung zwischen einem Polsterbezug und einem das Polster aufnehmenden Träger.**

(30) Priorität : **09.12.88 DE 3841531**

(43) Veröffentlichungstag der Anmeldung :
**13.06.90 Patentblatt 90/24**

(45) Bekanntmachung des Hinweises auf die
Patenterteilung :
**22.04.92 Patentblatt 92/17**

(84) Benannte Vertragsstaaten :
**DE ES FR GB IT**

(56) Entgegenhaltungen :
**FR-A- 2 481 907**
**US-A- 3 981 534**
**US-A- 4 715 651**

(73) Patentinhaber : **BAYER AG**
**W-5090 Leverkusen 1 Bayerwerk (DE)**

(72) Erfinder : **Rink, Manfred**
**Mülhauserstrasse 27**
**W-5000 Köln 60 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Befestigung zwischen einem Polsterbezug und einem das Polster aufnehmenden Träger, bei der am Rand des Polsterbezuges ein elastisch biegsamer Hakenprofilstreifen mit Haken angeordnet ist und der Träger einen U-förmigen Rand aufweist, welcher aus einem Mittelsteg, einem äußeren Schenkel und einem inneren Schenkel besteht, wobei der äußere Schenkel dieses Randes Ausnehmungen aufweist und im Bereich dieser Ausnehmungen sich in Richtung des inneren Schenkels erstreckende Nasen angeordnet sind, an denen der Haken des Hakenprofilstreifens eingerastet ist.

Bei Polstern für anspruchsvollere Sitzmöbel und insbesondere für Fahrzeugsitze besteht die Schwierigkeit, eine leicht lösbare Befestigung des Bezuges zu schaffen welche einen Austausch des Bezuges oder Austausch des Polsters und insbesondere auch die Wiederverwendung des Bezuges erlaubt. Insbesondere bei Fahrzeugsitzen geht heute der Trend dahin, die Sitzbezüge bei der Polsterherstellung direkt zu hinterschäumen, so daß eine unlösbare Verbindung entsteht. Zum anderen sind Fahrzeugsitze derart konzipiert, daß die Polster, wenn überhaupt, ohne größeren Arbeitsaufwand kaum mehr von ihren Trägern lösbar sind. Häufig ist der Austausch eines ganzen Sitzunterteils oder einer Rückenlehne erforderlich, wenn das Polster durchgesessen oder der Bezug verschlissen ist. Ein austauschbarer Bezug würde die heute üblichen Schonbezüge überflüssig machen und den Austausch der Polster erleichtern.

Aus FR-PS 2 481 907 ist ein Sitz bekannt, dessen aus Kunststoff bestehender Träger einen U-förmigen Rand mit Ausnehmungen aufweist, in denen symmetrisch angeordnete Klemmnasen vorgesehen sind, welche zwischen sich den Rand eines über ein Profil gespannten Bezuges festhalten. Diese Klemmbefestigung ist je nach Ausführung überhaupt nicht lösbar oder nur mit Hilfsmitteln, wodurch Beschädigungen auftreten können.

Andererseits ist aus DE-OS 2 340 831 bekannt, den Bezug für einen Stuhl mit einem Hakenstreifen zu versehen und dessen Haken an einer Nase eines Trägers einzurasten, wobei der Hakenstreifen durch Anliegen gegen eine Profilierung des Trägers gegen Lösen gesichert ist. Diese Befestigung läßt sich, wenn überhaupt, nur außerordentlich schwer lösen. Bei anderen Ausführungsformen ist die Befestigung zwar lösbar, nicht aber in ausreichender Weise gegen selbsttätiges Lösen gesichert.

Schließlich ist der eingangs beschriebene Sitz aus US-A-3 981 534 bekannt, wobei ein extrudierter J-geformter Kunststoffstreifen mit einem Polsterbezug vernäht ist und am kürzeren Schenkel eine nach innen gerichtete Lippe aufweist. Dieser Kunststoffstreifen ist so ausgebildet, daß er beide Seiten eines sich nach unten erstreckenden Umfangsflansches eines Metallrahmens abdeckt. Dieser Kunststoffstreifen ist gegen Lösen durch Eingriff dieser Lippe in eine Mehrzahl aus dem Flansch ausgeschnittener und nach innen gerichteter Haltelaschen gesichert.

Es besteht die Aufgabe, eine Befestigung der eingangs genannten Art - insbsondere für Polsterbezüge von Fahrzeugsitzen - zu finden, welche preiswert herstellbar ist.

Gelöst wird diese Aufgabe dadurch, daß der Träger aus einem Kunststoffspritzgußteil besteht und die Ausnehmungen sich mindestens so weit in den Mittelsteg hinein erstrecken wie die Nasen in Richtung des inneren Schenkels.

Dadurch wird erreicht, daß der Bezug und/oder das Polster ohne Schwierigkeit austauschbar sind.

Der Träger besteht beispielsweise aus einem Rahmen oder einer Schale aus Kunststoff. Der Hakenprofilstreifen besteht beispielsweise aus Polypropylen, Polyethylen oder einem anderen Kunststoff mit ähnlichen elastischen Eigenschaften. Der Hakenprofilstreifen soll einerseits so elastisch sein, daß er sich der Geometrie des Trägers annassen kann; aber andererseits muß er genügend Steifigkeit aufweisen, um sich nicht zu stark zu verformen. Es versteht sich, daß bei eingerastetem Hakenprofilstreifen der Bezug unter solcher Spannung stehen muß, daß sich bei belastetem Sitz die Befestigung nicht löst.

Dies bedeutet keinerlei Problem, weil in aller Regel Polsterbezüge so straff gespannt sind, daß sie fest und faltenfrei am Polster anliegen.

Durch die Ausbildung des Trägers als Kunststoffspritzgußteil wird eine Befestigung geschaffen, welche recht preiswert herstellbar ist, weil das Formwerkzeug zum Herstellen des Trägers keiner Schieber bedarf. Im Bereich zwischen Mittelsteg und Nase können sich nämlich die Konturierungen der beiden Formwerkzeughälften senkrecht tangieren.

Gemäß einer besonderen Ausgestaltung der neuartigen Befestigung ist der Abstand der Nasen vom inneren Schenkel geringer als die Breite B des Hakenprofilstreifens.

Dadurch wird eine besondere Sicherheit gegen unbeabsichtigtes Lösen der Verbindung gewährleistet.

Der Hakenprofilstreifen läßt sich an den Nasen einschnappen und kann sich von allein nicht lösen. Da der Polsterbezug zumindest durch Zusammenpressen des Polsters nachgiebig ist, kann man zum Lösen des Polsterbezuges den Haken durch die Ausnehmungen in Richtung des anderen Schenkels drücken, wodurch er von den Nasen abgleitet, so daß der Hakenprofilstreifen aus dem Spalt zwischen Nasen und dem inneren Schenkel herausziehbar ist.

In der Zeichnung ist die neuartige Befestigung am Beispiel eines Fahrzeugsitzpolsters rein schematisch dargestellt. Es zeigen:

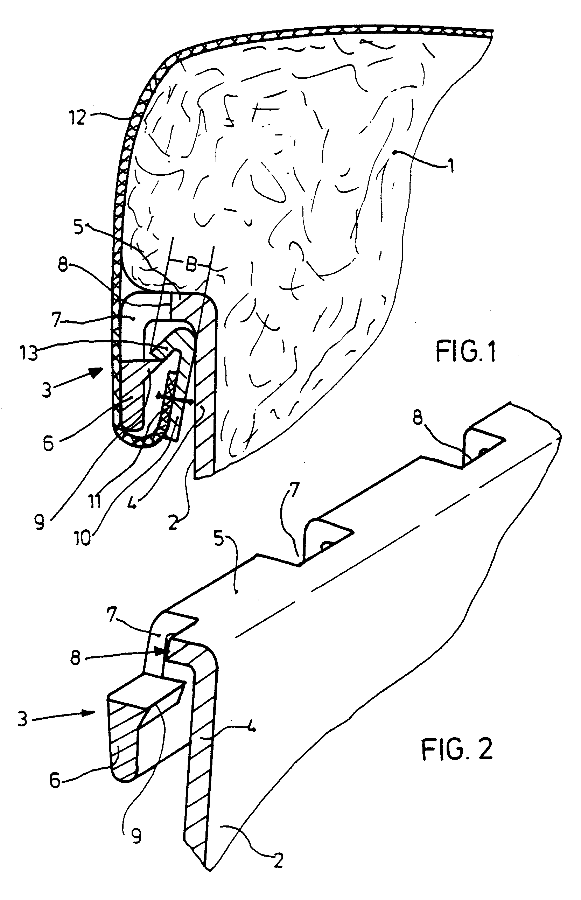

Fig. 1 einen Schnitt durch die Befestigung und

Fig. 2 den Rand des Trägers für das Polster in räumlicher Darstellung.

Ein Polster 1 ist in einem schalenartigen Träger 2 angeordnet, von welchem im wesentlichen nur der Rand 3 dargestellt ist. Der Träger 2 besteht aus einem Kunststoffspritzgußteil aus Polyamid-6 mit 30 Gew.-% Glasfasergehalt. Sein Rand 3 geht von einem inneren Schenkel 4 über einen Mittelsteg 5 U-förmig in einen äußeren Schenkel 6 über. Der Rand 3 weist in regelmäßigen Abständen Ausnehmungen 7 auf, welche sich einerseits bis zur Mitte 8 des Mittelsteges 5 erstrecken und andererseits am äußeren Schenkel 6 auf dem Niveau von Nasen 9 enden. Die Nasen 9 erstrecken sich im Bereich dieser Ausnehmungen 7 in Richtung des Schenkels 4. An den Nasen 9 ist ein biegsamer Hakenprofilstreifen 10 aus Polyethylen eingerastet, an welchem der Rand 11 eines Polsterbezuges 12 befestigt ist. Die Breite B des Hakenprofilstreifens 10 ist geringfügig größer als der Abstand der Nasen 9 vom Schenkel 4, so daß der Haken 13 des Hakenprofilstreifens 10 nicht von allein von den Nasen 9 abgleiten kann. Es versteht sich, daß die Größe des Polsterbezuges 12 so bemessen ist, daß er das Polster 1 stramm überspannt.

## Patentansprüche

1. Befestigung zwischen einem Polsterbezug (12) und einem das Polster (1) aufnehmenden Träger (2), bei der am Rand (11) des Polsterbezuges (12) ein elastisch biegsamer Hakenprodilstreifen (10) mit Haken (13) angeordnet ist und der Träger (2) einen U-förmigen Rand (3) aufweist, welcher aus einem Mittelsteg (5), einem äußeren Schenkel (6) und einem inneren Schenkel (4) besteht, wobei der äußere Schenkel (6) dieses Randes (3) Ausnehmungen (7) aufweist und im Bereich dieser Ausnehmungen (7) sich in Richtung des inneren Schenkels (4) erstreckende Nasen (9) angeordnet sind, an denen der Haken (13) des Hakenprofilstreifens (10) eingerastet ist, dadurch gekennzeichnet, daß der Träger (2) aus einem Kunststoffspritzgußteil besteht und die Ausnehmungen (7) sich mindestens so weit in den Mittelsteg (5) hinein erstrecken wie die Nasen (9) in Richtung des inneren Schenkels (4).

2. Befestigung nach Anspruch 1, dadurch gekennzeichnet, daß der Abstand der Nasen (9) vom inneren Schenkel (14) geringer ist als die Breite B des Hakenprofilstreifens (10).

## Claims

1. Fastening between an upholstery cover (12) and a support (2) for receiving the upholstery (1), in which fastening a resiliently pliable hook profile strip (10) with a hook (13) is mounted on the edge (11) of the upholstery cover (12) and the support (2) has a U-shaped edge (3), which consists of a central web (5), an outer arm (6) and an inner arm (4), in which case the outer arm (6) of this edge (3) has recesses (7), and lugs (9) extending in the direction of the inner arm (4) are mounted adjacent to these recesses (7), the hook (13) of the hook profile strip (10) engaging in said lugs (9), characterised in that the support (2) consists of a plastics injection-moulded part and the recesses (7) extend at least as far into the central web (5) as the lugs (9) in the direction of the inner arm (4).

2. Fastening according to claim 1, characterised in that the distance of the lugs (9) from the inner arm (14) is smaller than the breadth B of the hook profile strip (10).

## Revendications

1. Fixation entre une enveloppe (12) de coussin et un support (2) recevant le coussin (1), dans laquelle une bande profilée élastique et souple (10) comportant un crochet (13) est disposée sur le bord (11) de l'enveloppe (12) du coussin et le support (2) comporte un rebord (3) en étrier se composant d'une âme médiane (5), d'une aile extérieure (6) et d'une aile intérieure (4), l'aile extérieure (6) de ce rebord (3) comportant des évidements (7) et des becs (9) orientés vers l'aile intérieure (4) et sur lesquels le crochet (13) de la bande profilée (10) s'encliquette étant disposés au droit de ces évidements (7), caractérisée en ce que le support (2) consiste en une pièce réalisée par injection de matière plastique et les évidements (7) se prolongent dans l'âme médiane (5) au moins aussi loin que les becs (9) se prolongent vers l'aile intérieure (4).

2. Fixation selon la revendication 1, caractérisée en ce que la distance séparant les becs (9) de l'aile intérieure (14) est inférieure à la largeur B de la bande profilée en crochet (10).

FIG.1

FIG. 2